# EUROPÄISCHE PATENTANMELDUNG

(11) **EP 4 831 788 A1**
(43) Veröffentlichungstag der Anmeldung: **28.10.2026**
(21) Anmeldenummer: 26166638.2
(22) Anmeldetag: 23.03.2026
(51) Int. Cl.: G06F 3/12, G06F 12/04

(54) **VERFAHREN ZUR VERMEIDUNG VON FEHLERN UND PROBLEMEN IN EINEM PDF-WORKFLOW**

(30) Priorität: 24.04.2025 DE 102025115764
(71) Anmelder: Heidelberger Druckmaschinen AG, 69115 Heidelberg (DE)
(72) Erfinder: Stritzel, Bernd, 24340 Goosefeld (DE); Becker, Fahim, 24107 Kiel (DE); Hansen, Sylke, 24161 Altenholz (DE)

(57) **Zusammenfassung**

Die Erfindung betrifft ein Verfahren zur Vermeidung von Fehlern und Problemen in einem PDF-Workflow in der grafischen Industrie, wobei der PDF-Workflow eingangsseitig ein PDF-Dokument (1) eines Druckereikunden verwendet. Es ist vorgesehen, dass das PDF-Dokument (1) des Druckereikunden in einem Rechner (8) in Bezug auf Meta-Daten (5) der Seitenbeschreibungsdaten des PDF-Dokumentes (1) des Druckereikunden ausgelesen wird, dass die Meta-Daten (5) in dem Rechner (8) auf zu erwartende Probleme im PDF-Workflow anhand von im Rechner (8) hinterlegten Kriterien (6) überprüft werden und dass für den Fall, dass im weiteren PDF-Workflow Probleme zu erwarten sind, Korrekturen oder Veränderungen (7) an dem PDF-Dokument des Kunden vorgenommen werden und ein optimiertes PDF-Dokument (2) durch den Rechner (8) erzeugt wird.

## Beschreibung

Die vorliegende Erfindung bezieht sich auf ein Verfahren zur Vermeidung von Fehlern und Problemen in einem PDF-Workflow in der grafischen Industrie, wobei der PDF-Workflow eingangsseitig ein PDF-Dokument eines Druckereikunden verwendet.

Heutzutage wird im digitalen Workflow in der Druckindustrie meist ein PDF-Dokument als Druckvorlage verwendet, welches bevorzugt über Internetanwendungen zur Verarbeitung und Erstellung des PDF-Dokuments bis hin zur Versendung an Druckereien verwendet wird. Dieses PDF-Dokument enthält die Druckvorlage in einer Seitenbeschreibungssprache. Es hat sich in der Praxis als nachteilig und fehleranfällig herausgestellt, dass bei der Erstellung des PDF-Dokuments mit der Druckvorlage Desktop-Publishing-Applikationen verwendet werden, welche zwar ein spezifikationsgemäßes aber schlecht oder ungünstig strukturiertes PDF-Dokument erzeugen. Ein derartiges schlecht oder ungünstig strukturiertes PDF-Dokument führt zur Problemen bei der Verarbeitung des PDF-Dokuments im weiteren Workflow, was häufig zu Fehlermeldungen und manuellen Korrekturen führt.

Es ist daher Aufgabe der vorliegenden Erfindung, ein Verfahren zur Vermeidung von Fehlern und Problemen in einem PDF-Workflow in der grafischen Industrie bereitzustellen, welches zu erwartende Probleme im Vorfeld erkennt und dafür sorgt, dass die Druckaufträge im PDF-Workflow problemlos verarbeitet werden können. Dabei sollen nach Möglichkeit manuelle Eingriffe während des PDF-Workflows oder in der Druckerei oder durch den Service eines Druckmaschinenherstellers vermieden werden.

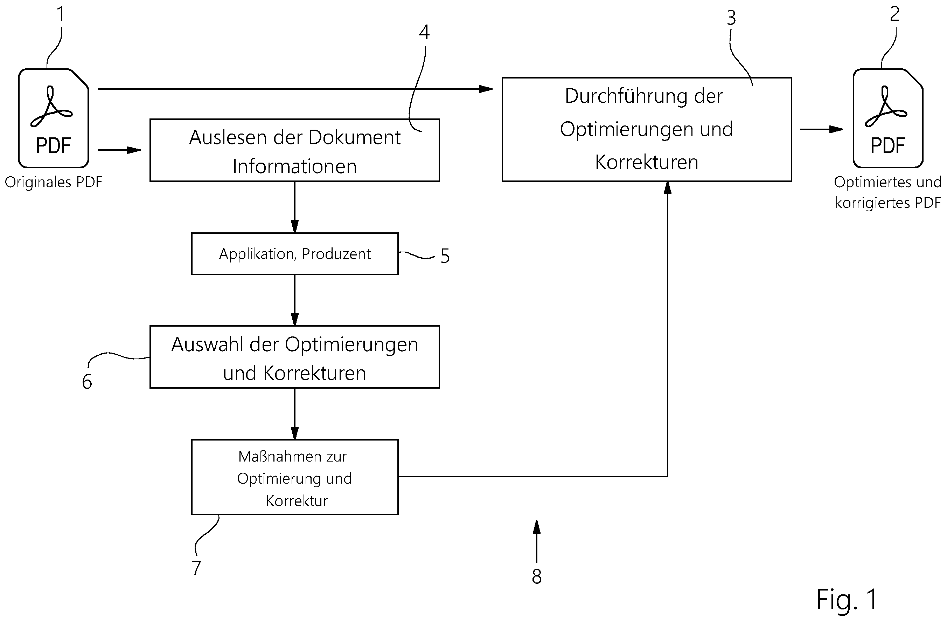

Erfindungsgemäß wird die vorliegende Aufgabe durch Patentanspruch 1 gelöst. Vorteilhafte Ausgestaltungen der vorliegenden Erfindung sind den Unteransprüchen und der Zeichnung zu entnehmen. Bei dem erfindungsgemäßen Verfahren ist vorgesehen, dass ein PDF-Dokument eines Druckereikunden zunächst in einem Rechner in Bezug auf Metadaten der Seitenbeschreibungsdaten des PDF-Dokuments des Druckereikunden ausgelesen wird. Diese Metadaten werden dann in dem Rechner dahingehend überprüft, ob die Metadaten Hinweise auf zu erwartende Probleme im weiteren PDF-Workflow geben.

Dies geschieht anhand von im Rechner hinterlegten Kriterien, welche mit entsprechenden zu erwartenden Problemen verknüpft sind. Sollte bei diesem Vergleich festgestellt werden, dass entsprechende Probleme zu erwarten sind, so nimmt der Rechner Korrekturen oder Veränderungen an dem PDF-Dokument des Kunden vor und erzeugt ein optimiertes PDF-Dokument, welches sich im weiteren PDF-Workflow problemlos verarbeiten lässt. Dies hat den großen Vorteil, dass problematische PDF-Dokumente so optimiert werden, dass sie im PDF-Workflow keine Probleme hinterlassen und dass gleichzeitig vermieden wird, dass PDF-Dokumente, bei denen keine Probleme zu erwarten sind, durch weitere Operationen oder Korrekturen bearbeitet werden müssen. Unnötige Korrekturen insbesondere durch manuelle Eingriffe des Bedienpersonals unterbleiben so.

In einer ersten Ausgestaltung der vorliegenden Erfindung ist vorgesehen, dass die Metadaten Applikationen zur Herstellung des PDF-Dokuments des Druckereikunden enthalten. In den Metadaten sind Informationen hinsichtlich der Softwareapplikation hinterlegt, mit der das PDF-Dokument des Druckereikunden erstellt wurde. Es ist somit für den Rechner nachvollziehbar, mit welcher Software das jeweilige PDF-Dokument des Druckereikunden erstellt wurde. Sollte sich eine derartige Software als problematisch oder problemanfällig erweisen, so erkennt der Rechner dies im Vergleich mit den hinterlegten Kriterien und stuft das PDF-Dokument aufgrund der erkannten Applikation zur Herstellung des PDF-Dokuments als problematisch ein. Entsprechend wird dann ein optimiertes PDF-Dokument erzeugt, welches die durch die Verwendung der als problematisch erkannten Applikation zu erwartenden Probleme umgeht. Dabei kann nicht nur der Softwarehersteller der Applikation berücksichtigt werden, sondern auch die jeweilige Version. Oft treten die Probleme nur bei bestimmten Versionen eines Softwareherstellers auf, so dass die Veränderung des PDF-Dokuments bei unkritischen Versionen gemäß der vorliegenden Erfindung vermieden werden kann.

In einer weiteren Ausgestaltung der vorliegenden Erfindung ist vorgesehen, dass in Abhängigkeit der erkannten Applikation zu erwartende Probleme im weiteren PDF-Workflow identifiziert werden. Durch den Vergleich im Rechner und die Berücksichtigung der jeweiligen Applikation zur Herstellung des PDF-Dokuments in Bezug auf Hersteller und Version können so genau die zu erwartenden Probleme identifiziert werden und es werden auch nur diese zu erwartenden Probleme durch eine Optimierung des PDF-Dokumentes korrigiert. Unnötige weitere Änderungen werden nicht vorgenommen.

Vorteilhafterweise ist vorgesehen, dass der Rechner in Abhängigkeit der zu erwartenden Probleme die im Rechner hinterlegten, zur jeweiligen Applikation passenden spezifischen Korrekturen auswählt und anwendet. Durch die Identifizierung der jeweiligen Applikation und Version kann der Rechner für jede Version und Applikation eine passende Korrektur durchführen. Somit wird nicht eine Korrektur für alle Probleme durchgeführt, sondern eine problemspezifische Korrektur wird anhand des erkannten Herstellers und der erkannten Version der bei der Erstellung des PDF-Dokuments verwendeten Softwareapplikation berücksichtigt. Auch dies erlaubt eine besonders effiziente und optimierte Korrektur des PDF-Dokuments durch den Rechner.

Weiterhin ist vorgesehen, dass die spezifischen Korrekturen wenigstens eine Korrektur wie eine Umwandlung in ein anderes Dateiformat mit anschließender Wandlung in ein PDF-Dokument enthalten. Der Rechner erkennt bei der Verarbeitung der Metadaten des PDF-Dokuments, von welcher Applikation und Version die Daten erzeugt worden sind. Der Rechner prüft dann, ob die Daten dieser erkannten Applikation zu bekannten Problemen in den nachfolgenden Verarbeitungsschritten im PDF-Workflow führen könnten. Wenn ein derartiges Problem erkannt wird, so wird eine spezifische Korrektur durchgeführt, bei der das PDF-Dokument in ein anderes Format z. B. Postscript umgewandelt wird und somit standardisiert wird. Anschließend wird das Dokument dann wieder in ein PDF umgewandelt, so dass es zu dem weiteren PDF-Workflow passt. Durch die Konvertierung in Postscript und die anschließende Wandlung in ein PDF-Dokument werden kritische Strukturen wie z. B. Transparenzen eliminiert, welche im weiteren PDF-Workflow zu Problemen führen würden.

Bei einer besonders vorteilhaften Ausgestaltung der vorliegenden Erfindung ist vorgesehen, dass der Rechner durch eine Softwarelösung in einem Internet-Cloudspeicher realisiert ist. Das erfindungsgemäße Verfahren kann grundsätzlich auf einem stationären Rechner in einer Druckerei aber auch beim Kunden der Druckerei oder in einer Agentur durchgeführt werden. Besonders vorteilhaft ist aber eine Softwarelösung in einem Cloud-Speicher, da dieser Cloudspeicher im Internet besonders einfach in einen modernen PDF-Workflow integriert werden kann, da die Übermittlung der PDF-Dokumente von den beteiligten Parteien ohnehin über das Internet erfolgt. Somit benötigt eine Softwarelösung mit Cloudspeicher keine weitere zusätzliche Hardware-Infrastruktur.

Die vorliegende Erfindung wird nachfolgend anhand einer Figur näher beschrieben und erläutert. Die Figur zeigt:
Das Ablaufdiagramm des erfindungsgemäßen Verfahrens zur Vermeidung von Fehlern und Problemen in einem PDF-Workflow.

Bei der Ausgestaltung gemäß der Figur ist vorgesehen, dass das erfindungsgemäße Verfahren zur Vermeidung von Fehlern und Problemen in einem PDF-Workflow auf einem Rechner 8 stattfindet, welcher entweder in der Agentur des Druckereikunden oder in der Druckerei selbst steht. Anstelle eines physischen Rechners 8 kann aber auch ein Cloudspeicher im Internet verwendet werden, wo das erfindungsgemäße Verfahren als Cloudsoftware realisiert ist und dort abläuft. Bei dem erfindungsgemäßen Verfahren wird zunächst die Druckvorlage mit dem PDF-Dokument des Kunden 1 in dem Rechner 8 hinsichtlich der Metadaten des PDF-Dokuments 4 ausgelesen. Diese Metadaten enthalten Informationen über das PDF-Dokument 1, wie z. B. den Hersteller und die Version der Applikation, mit der das PDF-Dokument des Kunden 1 erstellt wurde. Die so erfassten Metadaten wie Applikation und Produzent 5 des PDF-Dokuments 1 werden dann im Rechner 8 mit hinterlegten Kriterien zur Fehleranfälligkeit der jeweiligen Softwareapplikation bzw. Version verglichen. Dazu ist ein Softwaremodul 6 vorgesehen, was diesen Vergleich durchführt und als Ergebnis dieses Vergleichs die passenden Optimierungen und Korrekturen für das PDF-Dokument des Kunden 1 auswählt.

Nachdem der Rechner 8 die passenden Maßnahmen zur Optimierung und Korrektur am PDF-Dokument 7 ausgewählt hat, setzt der Rechner 8 im letzten Schritt die ausgewählten Maßnahmen 7 um, indem eine entsprechende Optimierung und Korrektur 3 in einem Softwaremodul zur Durchführung von Optimierungen und Korrekturen am PDF-Dokument des Kunden 1 durchgeführt werden. Nachdem die Korrektur- und Optimierungsmaßnahmen 7 durchgeführt worden sind, gibt der Rechner 8 ein aufbereitetes PDF 2 aus, welches im weiteren PDF-Workflow problemlos verarbeitet werden kann.

Sollte der Rechner 8 beim Auslesen der Metainformationen des PDF-Dokuments 4 keine problematische Softwareapplikation bzw. -version 5 erkennen, so führt der Rechner 8 keine Optimierungen oder Korrekturen am PDF-Dokument 1 aus und das PDF-Dokument des Kunden 1 wird unverändert als Ausgangsdokument PDF 2 bereitgestellt. Dies bedeutet, dass nur dann Korrekturen und Optimierungen am PDF-Dokument des Kunden 1 durchgeführt werden, wenn diese aufgrund der zu erwartenden Probleme im weiteren PDF-Workflow überhaupt nötig sind. Dies bietet den großen Vorteil, dass nur dann Daten konvertiert werden, wenn in den nachfolgenden Prozessschritten auch Probleme zu erwarten sind. Die Daten von Applikationen 5, welche z. B. Transparenzen korrekt und effizient einsetzen, sind davon nicht betroffen und bleiben unverändert. Weiterhin muss der Kunde bei diesem Verfahren nicht im Vorfeld die Daten hinsichtlich als kritisch bekannter Applikationen und Versionen 5 prüfen oder den Ersteller des PDF-Dokuments des Kunden 1 darum bitten, dieses Dokument durch eine andere unkritische Applikation erstellen zu lassen. Damit wird der PDF-Workflow in der grafischen Industrie effizienter und weniger fehleranfällig gestaltet.

### Bezugszeichenliste

- 1: PDF-Dokument des Kunden
- 2: Aufbereitetes PDF
- 3: Softwaremodul zur Durchführung von Optimierungen und Korrekturen des PDF
- 4: Auslesen von Informationen des PDF-Dokuments
- 5: Informationen
- 6: Softwaremodul zur Auswahl von Optimierungen und Korrekturen am PDF-Dokument
- 7: Maßnahmen zur Optimierung und Korrektur am PDF-Dokument
- 8: Rechner

## Patentansprüche

1. Verfahren zur Vermeidung von Fehlern und Problemen in einem PDF-Workflow in der grafischen Industrie, wobei der PDF-Workflow eingangsseitig ein PDF-Dokument (1) eines Druckereikunden verwendet,
**dadurch gekennzeichnet,**
**dass** das PDF-Dokument (1) des Druckereikunden in einem Rechner (8) in Bezug auf Meta-Daten (5) der Seitenbeschreibungsdaten des PDF-Dokumentes (1) des Druckereikunden ausgelesen wird,
**dass** die Meta-Daten (5) in dem Rechner (8) auf zu erwartende Probleme im PDF-Workflow anhand von im Rechner (8) hinterlegten Kriterien (6) überprüft werden und dass für den Fall, dass im weiteren PDF-Workflow Probleme zu erwarten sind, Korrekturen oder Veränderungen (7) an dem PDF-Dokument des Kunden vorgenommen werden und ein optimiertes PDF-Dokument (2) durch den Rechner (8) erzeugt wird.

2. Verfahren nach Anspruch 1,
**dadurch gekennzeichnet,**
**dass** die Meta-Daten (5) Applikationen zur Herstellung des PDF-Dokumentes des Druckereikunden enthalten.

3. Verfahren nach Anspruch 2,
**dadurch gekennzeichnet,**
**dass** in Abhängigkeit der erkannten Applikationen zur erwartende Probleme im weiteren PDF-Workflow identifiziert werden.

4. Verfahren nach einem der vorhergehenden Ansprüche 2 oder 3,
**dadurch gekennzeichnet,**
**dass** der Rechner (8) in Abhängigkeit der zu erwartenden Probleme die im Rechner (8) hinterlegten zur jeweiligen Applikation passenden spezifischen Korrekturen (6) auswählt und anwendet.

5. Verfahren nach Anspruch 4,
**dadurch gekennzeichnet,**
**dass** die spezifischen Korrekturen (6) wenigstens eine Korrektur wie eine Umwandlung in ein anderes Dateiformat mit anschließender Wandlung in ein PDF-Dokument enthalten.

6. Verfahren nach einem der vorhergehenden Ansprüche,
**dadurch gekennzeichnet,**
**dass** der Rechner (8) bei der Optimierung (3) des PDF-Dokumentes des Druckereikunden kritische Strukturen, welche zu Problemen im weiteren PDF-Workflow führen können, eliminiert.

7. Verfahren nach einem der vorhergehenden Ansprüche,
**dadurch gekennzeichnet,**
**dass** der Rechner (8) durch eine Softwarelösung in einem Internet-Cloud-Speicher realisiert ist.
